**Europäisches Patentamt**

**European Patent Office**

**Office européen des brevets**

(11) Veröffentlichungsnummer: **0 154 598 B1**

# EUROPÄISCHE PATENTSCHRIFT

(45) Veröffentlichungstag der Patentschrift: **27.12.91**

(51) Int. Cl.⁵: **A01K 63/04**, A61D 7/00

(21) Anmeldenummer: **85710003.6**

(22) Anmeldetag: **18.02.85**

(54) Verfahren zur Verabreichung von Medikamenten od. dgl. an in Wasserbehältern gehaltene Tiere, insbesondere Fische.

(30) Priorität: **07.03.84 DE 3408235**

(43) Veröffentlichungstag der Anmeldung:
**11.09.85 Patentblatt 85/37**

(45) Bekanntmachung des Hinweises auf die Patenterteilung:
**27.12.91 Patentblatt 91/52**

(84) Benannte Vertragsstaaten:
**CH FR GB IT LI NL SE**

(56) Entgegenhaltungen:

| | |
|---|---|
| EP-A- 0 074 323 | DE-A- 3 224 365 |
| GB-A- 2 020 266 | US-A- 1 747 804 |
| US-A- 2 593 608 | US-A- 3 199 678 |
| US-A- 3 854 480 | |

(73) Patentinhaber: **Holz, Wolfgang, Dr.**
**Haus Nr. 7**
**W-8091 Ramerberg/Hart(DE)**

Patentinhaber: **Aquarium Münster Pahlsmeier GmbH**
**Galgheide 8**
**W-4404 Telgte(DE)**

(72) Erfinder: **Holz, Wolfgang, Dr.**
**Haus Nr. 7**
**W-8091 Ramerberg/Hart(DE)**

(74) Vertreter: **Jabbusch, Wolfgang, Dr.**
**Elisabethstrasse 6**
**W-2900 Oldenburg(DE)**

## Beschreibung

Die Erfindung betrifft ein Verfahren zur Verabreichung von Medikamenten, Desinfektionsmitteln und dergleichen an im Wasser lebende und in Behältern gehaltene Tiere, insbesondere Fische, bei dem ein in Trockenform vorliegender, in das Wasser zu gebender Wirkstoff in ein in den Behälter setzbares wasserdurchlässiges Behältnis gegeben und die in dem Behältnis nach seinem Einsetzen in das Wasser gebildete Wirkstofflösung an das umgebende Wasser im Behälter gegeben wird. Solch ein verfahren ist durch die US-A-3199678 bekannt.

Etwa 90 % aller bei Fischen, Amphibien und sonstigen im Wasser lebenden Tieren vorkommende Krankheiten sind ansteckend und durch das Wasser von Tier zu Tier übertragbar. Zur Behandlung kann man Medikamente in das Futter mischen. Diese Applikationsart funktioniert nicht, wenn die Tiere - im allgemeinen handelt es sich um Nutz- und Zierfische - das Futter verweigern, was ein häufiges Krankheitssymptom darstellt. Außerdem werden im Wasser schwimmende Krankheitserreger gar nicht und auf die auf der Körperoberfläche befindlichen Erreger nur unvollkommen beeinflußt. Aus diesen Gründen hat die Gabe von Medikamenten in das Fischwasser nach wie vor große Bedeutung. Bei dieser Applikationsweise hat man bisher folgende drei Methoden angewandt: Ein Arzneimittel in flüssiger Form wird in das Halterungswasser gemischt; ein Arzneimittel in Pulverform wird im Halterungswasser gelöst; ein zu Tabletten gepreßtes Arzneimittel in Trockenform wird in das Wasser gegeben, wo es sich langsam auflöst.

Die US-A 3 199 678 beschreibt einen sogenannten Aquarium-Bodenfilter. Bei dem bekannten Bodenfilter wird ein Steigrohr so in das Aquarium gesetzt, daß sein unteres offenes Ende in das Bodenmaterial, z.B. Kies oder grober Sand, eintaucht. In das untere Ende des Steigrohres wird ein Luftstrom geblasen, der im Steigrohr hochperlt und dabei das Wasser im Steigrohr mitzieht. Durch das Bodenmaterial im Aquarium strömt ständig Wasser nach, so daß das Bodenmaterial selbst eine Filterfunktion ausübt. Das oben aus dem Steigrohr austretende Wasser ist gefiltert und strömt in der Nähe des Wasserspiegels des Aquariums ab, wobei sich ein ständiger Wasserumlauf im Aquarium einstellt.

Auf das obere freie Ende des Steigrohres ist ein mit seinem Boden dem Ende des Steigrohres abgekehrtes, topfartiges Behältnis gesteckt, welches nicht nur mit Filtermaterial zur Nachfilterung des das Steigrohr durchströmenden Wassers, sondern bei Bedarf auch mit dem Wasser beizumischenden Medikamenten für im Aquarium gehaltene Tiere füllbar ist. Das Medikament kann nur ein nichtflüssiges, also in Trockenform vorliegendes Medikament sein.

Das Behältnis wird ständig von kräftigem Wasserstrom durchströmt, der aus Löchern im Boden des Behältnisses wieder austritt. Der Austritt ist dabei vollkommen undefiniert und muß zumindest so groß sein, daß die im Steigrohr pro Zeiteinheit aufsteigende Wassermenge in der gleichen Zeiteinheit durch die Löcher des das Steigrohr praktisch verschließenden Bodens des Behältnisses auch abströmen kann. Bei der Verabreichung von Medikamenten tritt somit bei dem bekannten Verfahren der Nachteil auf, daß ein Medikament nur dann nutzbar ist, wenn es Kapsel-, Tabletten- oder dergleichen besonders grobkörnige, nur schlecht lösbare Trockenform aufweist. Pulver würde dagegen durch die relativ großen Löcher, die bei einem Filter, wie vorbeschrieben, erforderlich sind, in kürzester Zeit in das Aquarium geschwemmt werden. Weiterhin wird das Behältnis auch, wie bei jedem bekannten Filter, derart heftig von großen Wassermengen durchströmt, daß leicht lösliche Arzneimittel selbst dann, wenn sie besonders grobkörnig oder in Kapseloder Tablettenform vorliegen, noch viel zu schnell in Lösung gehen.

Dies bekannte Verfahren des Einbringens eines Arzneimittels in das Halterungswasser haben den Nachteil, daß bei jeder Arzneimittelgabe die Wirkstoffkonzentration im Wasser bis zur Verträglichkeitsgrenze der Fische ansteigt, um dann bis zur nächsten Gabe stark abzusinken, was für die Fische eine erhebliche Belastung bedeutet.

Der Erfindung liegt die Aufgabe zugrunde, ein Verfahren zur Verabreichung von Medikamenten oder dergleichen an in Wasserbehältern gehaltene Tiere, insbesondere Fische, zu entwickeln, mit dem stark wechselnde Wirkstoffkonzentrationen im Halterungswasser vermieden werden und mit dem über den Verlauf der Behandlungszeit programmierbare Wirkstoffkonzentrationskurven ermöglicht werden.

Diese Aufgabe ist erfindungsgemäß dadurch gelöst worden, daß ein Wirkstoff enthaltendes Arzneimittel bzw. Arzneimittelgemisch in Pulverform zubereitet wird, deß die wirkstofflösung durch die Behältniswand diffundiert, wobei, zur Beeinflussung der Diffusionsgeschwindigkeit der Wirkstoffe durch die Behältniswand, dem Arzneimittel bzw. Arzneimittelgemisch zugesetzte adsorbierende und/oder quellende Hilfsstoffe verwendet werden und als zusätzliches Regulans der Diffusionsgeschwindigkeit die die Durchlässigkeit der Behältniswand bestimmende Porengröße des Behältniswand-Materials verwendet wird.

Das erfindungsgemäße Verfahren sieht vor, ein Arzneimittel bzw. Arzneimittelgemisch in Pulverform herzustellen, in ein flexibles oder starres Behältnis mit genau definierter Durchlässigkeit für Wasser bzw. wässrige Lösungen abzufüllen und dieses Behältnis in das Fischbecken zu hängen, zu stellen oder darin schwimmen zu lassen. Das Behältnis kann aus bekannten geeigneten Papiersorten, Kunststoffgeweben oder ähnlichem porösem organischem oder anorganischem Material bestehen. Entscheidend dabei ist, ein solches Behältnis-Wand-Material zu wählen, daß die Porengröße der Behältnis-Wand eine Diffusion in Wasser gelöster Wirkstoffe in das umgebende Fischwasser zuläßt. Durch Wahl von Material mit entsprechenden Porengrößen kann die Diffusionsgeschwindigkeitjeweils auf die gewünschte Wirkungsdauer und Wirkungsintensivität eingestellt werden.

Nach Einhängen eines solchen erfindungsgemäßen Arzneimittelbehälters mit darin enthaltenem Arzneimittel in ein Fischbecken, dringt zunächst Wasser in den Behälter ein und löst sich darin soviel Wirkstoff, daß eine konzentrierte Lösung entsteht. Das osmotische Druckgefälle zwischem dem Behälterinnenraum und dem umgebenden Wasser führt zu einer Diffusion der Wirkstoffe durch die Behälterwand. Dieser osmotische Druckausgleich verläuft so lange, bis die Wirkstoffkonzentration innerhalb und außerhalb gleich ist. Die Auflösung der Wirkstoffe erfolgt - was wünschenswert ist - über einen längeren, bestimmbaren Zeitraum. Während der Behandlung der Tiere, die 1 bis 30 Tage, im allgemeinen aber 3 bis 7 Tage, dauern kann, befindet sich in dem erfindungsgemäßen Behälter neben konzentrierter Wirkstofflösung auch ungelöster Wirkstoff. In dem Maße, in dem konzentrierte Lösung durch die Behälterwand diffundiert, geht neuer Wirkstoff in Lösung. Die Austrittsgeschwindigkeit der Wirkstoffe in das Fischwasser kann wunschgemäß schneller oder langsamer eingestellt werden, nicht nur durch Wahl der geeigneten Porengröße des Behältnismaterials, sondern auch durch Zusatz von adsorbierenden oder quellenden Hilfsstoffen zu dem pulverförmigen Arzneimittel. Es ist demzufolge mit der Erfindung möglich, Wirkstoffkonzentrationskurven im Ablauf der Behandlungszeit zu programmieren, was mit bisherigen Applikationsmethoden nicht möglich war.

Für das erfindungsgemäße Verfahren geeignetes Behältnismaterial kann auf folgende Weise auf Eignung geprüft werden: Die für die Therapie vorgesehen Wirkstoffe werden in ein aus dem zu prüfenden Material gefertigtes Behältnis gegeben und dieses wird in ein mit Wasser gefülltes Wasserbecken gehängt. Die aus dem Behältnis austretenden Wirkstoffe werden in regelmäßigen Zeitabständen durch übliche Analyseverfahren quantitativ bestimmt (photometrisch bzw. durch HPLC, wenn es sich um Wirkstoffgemische handelt).

Auf dem Markt befindliches Behältnismaterial wurde auf Eignung für erfindungsgemäße Behältnisse mit verschiedenen Arzneistoffen geprüft. Die Wirkstoff-Diffusion in das umgebende Wasser war zum Beispiel in einem Fall wie folgt: Von 40 g des in das Behältnis abgefüllten Wirkstoffes diffundierten in 300 1 Wasser am

| | | |
|---|---|---|
| 1. Tag = | 12 | g |
| 2. Tag = | 9 | g |
| 3. Tag = | 7,5 | g |
| 4. Tag = | 6 | g |
| 5. Tag = | 3,5 | g |
| 6. Tag = | 2 | g |
| | 40,0 | g |

Der Wirkstoff war in verdünnter wässriger Lösung nicht haltbar und wurde mit einer Halbwertzeit von 24 Stunden abgebaut (Wirkstoffverlust von 50 % in 24 Stunden). Wenn man diesen Verlust gegen den Zuwachs durch Diffusion aus dem erfindungsgemäßen Behältnis aufrechnet, ergibt sich das folgende durch Analyse bestätigte Bild:

<u>Tabelle</u>: Wirkstoff-Applikation nach dem erfindungsgemäßen Verfahren.

Einmalige Gabe von 40 g in 300 l Wasser, Halbwertzeit des Wirkstoffes: 24 Stunden

| Tag | Wirkstoff-Menge am Tagesanfang | Wirkstoff-Tages-Zunahme durch Diffusion | Verlust durch Wirkstoff-Abbau | Wirkstoff-Menge am Tagesende |
|---|---|---|---|---|
| 1. | 0 g | 12 g | 3 g | 9 g |
| 2. | 9 g | 9 g | 6,25 g | 11,75 g |
| 3. | 11,75 g | 7,5 g | 7,75 g | 11,50 g |
| 4. | 11,50 g | 6 g | 7,25 g | 10,25 g |
| 5. | 10,25 g | 3,5 g | 6,0 g | 7,75 g |
| 6. | 7,75 g | 2 g | 4,37 g | 5,38 g |
| | Summe | 40 g | | |

Die Wirksamkeitsgrenze bei diesem Wirkstoff lag bei 5 g pro 300 l, die Verträglichkeitsgrenze bei 15 g pro 300 l. Dieses Beispiel zeigt, daß eine 6 Tage im therapeutischen Bereich liegende Wirkstoff-Konzentration im Wasser durch eine einmalige Medikation erreicht werden konnte, obwohl der Wirkstoff eine schlechte Stabilität in wässriger Lösung hatte. Da Wirkstoff-Abbau und -Zuwachs etwa parallel liefen, ergab sich eine gleichmäßige Konzentrationskurve mit geringen Schwankungen. Ohne das erfindungsgemäße Verfahren hätte 6 Tage täglich dosiert werden müssen, wobei der zusätzliche Nachteil in Kauf genommen werden müßte, daß die Konzentration bei jeder Gabe bis zur Verträglichkeitsgrenze ansteigt, um dann wieder bis zur nächsten Gabe um die Hälfte abzusinken, was für die Fische eine starke Belastung bedeutet.

Das poröse Material kann ein ganzflächig wasserdurchlässiges Fasermaterial sein. Als Fasermaterial können die verschiedensten an sich bekannten Materialien gewählt werden, die in Verbindung mit dem jeweiligen verwendeten Arzneimittel den vorteilhaftesten Diffusionsverlauf garantieren. So können z.B. Filterpapierblätter, gepreßte Kunstfasermatten, Textilfasergewebe oder dergleichen Materialien als Diffusionsmembranen verwendet werden. Die Durchlässigkeit der Diffusionsmembran für die im Wasser gelösten Arzneimittelwirkstoffe kann bei Herstellung der Diffusionsmembran sehr genau vorgegeben und in Laborversuchen getestet werden. Der Fachhandel kann so mit Vorteil dem Tierhalter zu dem wirksamen Arzneimittel die jeweilige adäquate Diffusionsmembran liefern.

Die Diffusionsmembran kann beispielsweise als Bodeneinsatz für ein stabiles Arzneimittelbehältnis ausgebildet sein. Dies hat den Vorteil, daß bei Umstellung der Therapie auf ein anderes Arzneimittel lediglich der Bodeneinsatz des Arzneimittelbehältnisses gewechselt werden muß, während das Arzneimittelbehältnis selbst wiederverwandt werden kann. Selbstverständlich kann die Wandung des Arzneimittelbehältnisses auch vollständig aus dem Fasermaterial bestehen. Dies hat den Vorteil, daß das Arzneimittel gleich richtig dosiert in einem entsprechend ausgebildeten Arzneimittelbehältnis verpackt und vom Tierhalter erworben werden kann.

Das poröse Material kann auch eine Folie aus wasserundurchlässigem Werkstoff sein, die eine Perforation aufweist. Die mit einer Perforation versehene Folie kann genauso vielseitig und vorteilhaft verwendet werden, wie das Fasermaterial. Die Folie, deren wasserundurchlässiger Werkstoff vorzugsweise Polyäthylen ist, hat den Vorteil, daß die Diffusion nur durch die Perforationslöcher erfolgt. Die Diffusionsgeschwindigkeit kann somit nicht nur durch Vorgeben des Durchmessers der Perforationslöcher vorherbestimmt werden, was sehr genau möglich ist, sondern auch durch die Anzahl der Perforationslöcher, bzw. deren Verteilung.

Das Arzneimittelbehältnis kann auch ein Beutel sein, der vollständig aus dem porösen Material besteht. In den kostengünstig herstellbaren Beutel kann das Arzneimittel portionsweise abgefüllt werden. Dies garantiert eine richtige Dosierung des Arzneimittels. Der Beutel kann vom Tierhalter einfach in den Wasserbehälter eingeworfen und nach Verbrauch des Arzneimittels dem Wasserbehälter wieder entnommen werden. Wahlweise kann dann die Behandlung mit einem weiteren Beutel fortgesetzt werden. Die Abpackung des Arzneimittels in Portionsbeuteln gewährleistet mit Vorteil eine sachgemäße Lagerung des Arzneimittels, so daß der Tierhalter auch einen größeren Vorrat des Arzneimittels bereithalten kann.

Der Beutel kann z.B. als ein aus einer Schlauchhülle gefalteter Doppelkammerbeutel ausgebildet sein. Ein solcher Doppelkammerbeutel eignet sich in besonders vorteilhafter Weise für die Aufnahme einer Arzneimittelportion. Bei der Herstellung des Beutels wird zunächst eine Schlauchhülle aus dem porösen Material gefertigt, die etwa mittig quer zu ihrer Längserstreckung gefaltet wird, so daß sich ein Doppelkammerbeutel ausbildet, der mit einer Portion des Arzneimittels befüllt wird. Da der Doppelkammerbeutel aus einer Schlauchhülle gefaltet ist, weist er eine etwa doppelt so große wirksame Oberfläche auf, wie ein einfacher Beutel gleichen Volumens. Es wird also eine größere Oberfläche für die Diffusion bereitgestellt.

Ist der Beutel mit einem Faden zugenäht, und weist er eine einen Aufhänger bildende Schlaufe auf, so kann der mit Arzneimittel befüllte Beutel mittels eines Fadens schnell und sicher verschlossen werden. Vor dem Vernähen der Beutelwände wird ein schmaler öffnungsseitiger Bereich des Beutels umgeschlagen und anschließend mit den Beutelwandungen vernäht, so daß der Beutel im Umfaltungsbereich dicht schließt.

Die am Beutel angeordnete Schlaufe erleichtert die Handhabung des Beutels. Der Beutel kann an der Schlaufe frei in den Wasserbehälter eingehängt werden. Dies hat den Vorteil, daß er nach Eindringen des Wassers nicht auf den Boden des Wasserbehälters hinuntersinkt und daher dem Wasserbehälter nach Verbrauch des Arzneimittels leicht wieder entnommen werden kann. Ein freies Einhängen des Beutels in den Wasserbehälter hat außerdem den Vorteil, daß das Arzneimittel allseitig aus dem Beutel herausdiffundieren kann, so daß kein Wirkstoffrückstau entsteht, der den Therapieverlauf ungünstig beeinflussen kann. Der Faden, der zum Vernähen der Beuteils dient, kann endseitig eine Schlaufe aufweisen, die als Aufhänger für den Beutel verwendbar ist.

Ein Ausführungsbeispiel ist in der Zeichnung dargestellt. Es zeigen:

Fig. 1 eine graphische Darstellung der in Tabelle aufgeführten Konzentrationswerte,

Fig. 2 eine Schlauchhülle eines Doppelkammerbeutels in perspektivischer Ansicht und

Fig. 3 einen aus der Schlauchhülle gemäß Fig. 1 gefertigten Doppelkammerbeutel in perspektivischer Ansicht.

Viele Wirkstoffe sind in gelöster Form so unstabil, daß sie nur in Trockenform in den Handel gebracht werden können. Das erfindungsgemäße Verfahren nutzt diese Vorteile, vermeidet dabei aber schwerwiegende Nachteile, die mit dem direkten Einbringen von pulverförmigen Arzneimitteln ins Fischwasser verbunden sind, nämlich, daß die Wirkstoffe, bevor sie in Lösung gehen können, von den Fischen gefressen werden (Vergiftungsgefahr) und daß die Hilfsstoffe der Arzneimittel das Wasser trüben oder die Wasserqualität sonstwie beeinträchtigen. Beim erfindungsgemäßen Verfahren bleiben die unlöslichen Hilfsstoffe im Behältnis zurück.

Das erfindungsgemäße Verfahren kann man so anwenden, daß sich eine langsam über Stunden oder Tage ansteigende Wirkstoffkonzentration ergibt, mit dem Vorteil, daß die Fische nur der unbedingt notwendigen Arzneimittelkonzentration ausgesetzt werden. Sobald der Therapie-Erfolg sichtbar wird, kann die Medikamentenapplikation durch Herausnehmen des erfindungsgemäßen Behältnisses aus dem Wasser abgebrochen werden. Auch können Verluste durch Unverträglichkeiten bei Zierfischen reduziert werden, weil das langsame Ansteigen der Arzneimittel-Konzentration ein rechtzeitiges Erkennen von Unverträglichkeiten ermöglicht.

Ein Vorteil des erfindungsgemäßen Verfahrens liegt auch darin, daß die meisten permeablen Materialien, die für die Herstellung von erfindungsgemäßen Behältnissen infrage kommen, je nach Zusammensetzung des Arzneimittelgemisches und der verwendeten Hilfsstoffe, am ersten Tag die größte Wirkstoffmenge in das Wasser abgeben, die dann in den folgenden Tagen abnimmt. Das entspricht dem Erfordernis, daß am ersten Tag bereits die therapeutisch wirksame Dosis erreicht werden soll, während in den folgenden Tagen nur eine Erhaltungsdosis notwendig ist.

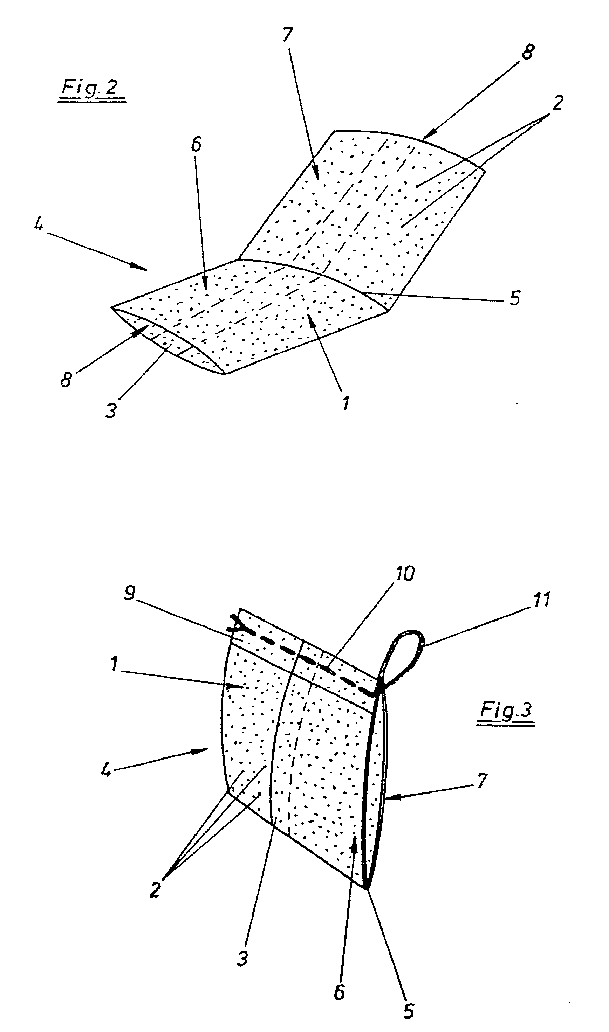

In Fig. 2 ist eine Folie 1 dargestellt, die eine Perforation 2 aufweist. Zwei einander gegenüberliegende Ränder der Folie 1 sind einwärts gefaltet und in einem Bereich 3 miteinander verklebt, so daß sie eine Schlauchhülle 4 bildet. Die Schlauchhülle 4 wird entlang einer Faltlinie 5, die nicht genau mittig quer zur Längsmittelachse der Schlauchhülle 4 verläuft, gefaltet, so daß zwei Kammern 6, 7 einer Doppelkammer entstehen und die Kammer 7 die Kammer 6 überragt. In die beiden Kammern 6, 7 wird durch die stirnseitigen Öffnungen 8 der Schlauchhülle 4 eine Substanz, beispielsweise ein pulverförmiges Arzneimittel, eingefüllt.

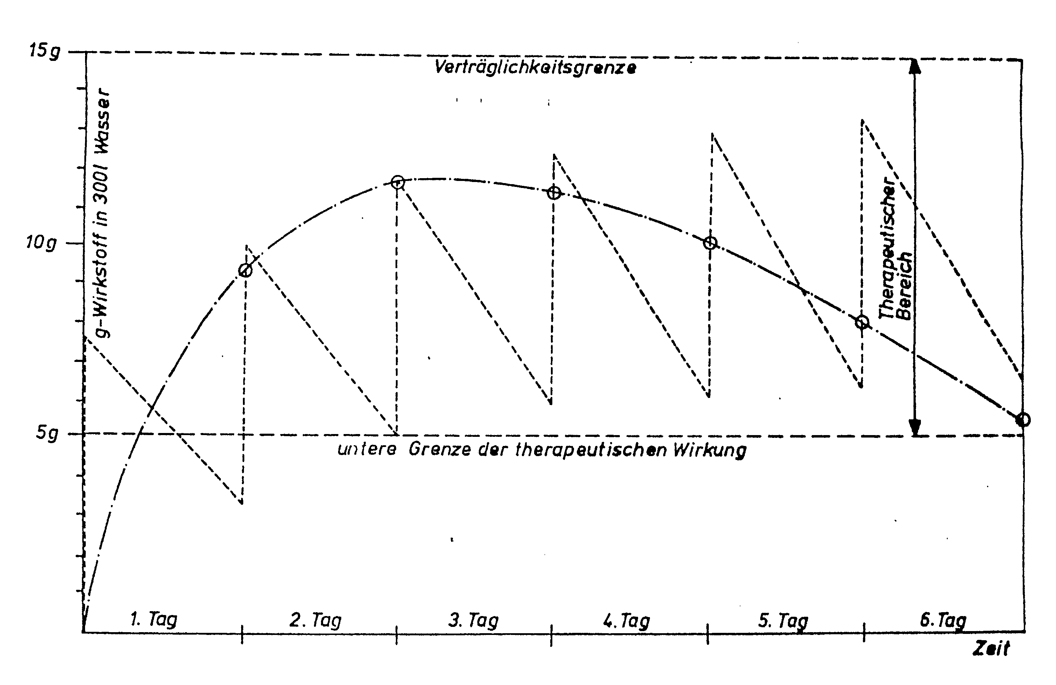

In Fig. 3 ist ein aus der Schlauchhülle 4 gefertigter Doppelkammerbeutel dargestellt. Gleiche Elemente sind mit gleichen Bezugsziffern wie in Fig. 1 versehen. Der endseitige Bereich 9 der Kammer 7, der, nach Faltung der Schlauchhülle 4 entlang der Faltlinie 5, die Kammer 6 überragt, wird über die Kammer 6 gefaltet. Im Bereich 9 ist der Doppelkammerbeutel mittels eines Fadens 10 zugenäht, so daß keine Substanzanteile durch die stirnförmigen Öffnungen 8 der Schlauchhülle 4 entweichen können. Der Faden 10 bildet eine Schlaufe 11, an der der Doppelkammerbeutel in einen Wasserbehälter, z.B. ein Aquarium, gehängt werden kann.

## Patentansprüche

1. Verfahren zur Verabreichung von Medikamenten, Desinfektionsmitteln und dergleichen an im Wasser lebende und in Behältern gehaltene Tiere, insbesondere Fische, bei dem ein in Trockenform vorliegender, in das Wasser zu gebender Wirkstoff in ein in den Behälter setzbares wasserdurchlässiges Behältnis gegeben und die in dem Behältnis nach seinem Einsetzen in das Wasser gebildete Wirkstofflösung an das umgebende Wasser im Behälter gegeben wird, dadurch gekennzeichnet, daß ein Wirkstoff enthaltendes Arzneimittel bzw. Arzneimittelgemisch in Pulverform zubereitet wird, daß die wirkstofflösung durch die Behältniswand diffundiert, wobei, zur Beeinflussung der Diffusionsgeschwindigkeit der Wirkstoffe durch die Behältniswand, dem Arzneimittel bzw. Arzneimittelgemisch zugesetzte adsorbierende und/oder quellende Hilfsstoffe verwendet werden und als zusätzliches Regulans der Diffusionsgeschwindigkeit die die Durchlässigkeit der Behältniswand bestimmende Porengröße des Behältniswand-Materials verwendet wird.

## Claims

1. A method of administering medicines, disinfectants and the like to animals living in water and kept in tanks, in particular fish, in which an active substance present in dry form and to be put into the water is put into a water-permeable receptacle placeable in the tank and the active-substance solution formed in the receptacle after the latter has been introduced into the water is emitted into the surrounding water in the tank, characterized in that a drug or drug mixture containing an active substance is prepared in powder form, in that the active-substance solution is diffused through the receptacle wall, adsorbing and/or expanding auxiliary agents added to the drug or drug mixture being used to influence the diffusion speed of the active substances through the receptacle wall and the pore size of the material of the receptacle wall - this pore size determining the permeability of the receptacle wall - being used to additionally regulate the diffusion speed.

## Revendications

1. Procédé pour administrer des médicaments, des désinfectants et analogue à des animaux vivant dans l'eau et placés dans des récipients, en particulier des poissons, procédé dans lequel un principe actif se présentant sous forme sèche et destiné à être administré dans l'eau est introduit dans un emballage perméable à l'eau et pouvant être installé dans le récipient, la solution du principe actif formée dans l'emballage après sa mise en place dans l'eau étant introduite dans l'eau ambiante se trouvant dans le récipient, caractérisé en ce qu'on prépare un médicament ou un mélange de médicaments sous forme de poudre et contenant le principe actif, en ce que la solution du principe actif diffuse à travers la paroi de l'emballage , auquel cas pour influer sur la vitesse de diffusion des principes actifs à travers la paroi de l'emballage, on utilise des adjuvants adsorbants et/ou gonflants ajoutés au médicament ou au mélange de médicaments et on utilise en tant que régulateur supplémentaire de la vitesse de diffusion le diamètre des pores du matériau de la paroi de l'emballage, diamètre qui définit la perméabilité de cette paroi de l'emballage.

g-Wirkstoff in 300l Wasser

15g

10g

5g

1.Tag

2.Tag

3.Tag

4.Tag

5.Tag

6.Tag

Zeit

untere Grenze der therapeutischen Wirkung

Verträglichkeitsgrenze

Therapeutischer Bereich

_Fig.2_

_Fig.3_